**Europäisches Patentamt**

**European Patent Office**

**Office européen des brevets**

(19)

(11) Numéro de publication : **0 378 034 B1**

## (12) FASCICULE DE BREVET EUROPEEN

(45) Date de publication du fascicule du brevet :
**07.10.92 Bulletin 92/41**

(51) Int. Cl.⁵ : **B60P 3/12, B60P 1/34**

(21) Numéro de dépôt : **89440137.1**

(22) Date de dépôt : **19.12.89**

(54) **Dispositif de basculement d'un plateau de chargement.**

(30) Priorité : **10.01.89 FR 8900221**

(43) Date de publication de la demande :
**18.07.90 Bulletin 90/29**

(45) Mention de la délivrance du brevet :
**07.10.92 Bulletin 92/41**

(84) Etats contractants désignés :
**AT BE CH DE ES GB IT LI LU NL SE**

(56) Documents cités :
**FR-A- 2 302 883**
**US-A- 3 623 617**
**US-A- 4 770 592**

(73) Titulaire : **JIGE LOHR WRECKERS, S.A.**
**Rue du Depôt**
**F-55800 Revigny-sur-Ornain (FR)**

(72) Inventeur : **Georges, Jean**
**Mesnil-aux-Bois**
**F-55260 Pierrefitte Sur Air (FR)**

(74) Mandataire : **Metz, Paul**
**Cabinet METZ PATNI 63, rue de la Ganzau B.P. 63**
**F-67024 Strasbourg Cédex (FR)**

# Description

La présente invention concerne un dispositif de chargement basculable destiné à un véhicule porteur.

De tels véhicules porteurs sont en particulier destinés au transport de véhicules automobiles en vue du dépannage ou de la mise en fourrière.

On connaît dans l'état actuel de la technique des dispositifs de chargement constitués par un plateau de chargement basculant autour d'un axe transversal disposé à l'arrière d'un faux châssis. Ce faux châssis est destiné à être installé sur le châssis d'un véhicule porteur de type standard. Le basculement du plateau de chargement est effectué à l'aide d'un vérin hydraulique appuyant d'une part sur le plateau de chargement ou sur un cadre porteur, et d'autre part sur un point fixe solidaire du faux châssis. Afin d'obtenir un bras de levier suffisant au début du basculement, il est nécessaire de décaler le point d'appui du vérin en-dessous du plan du faux châssis.

On connaît ainsi le brevet US n° 4,770,592 (WINTER) qui décrit un véhicule de dépannage muni d'une rampe ou faux châssis monté pivotant à l'arrière du châssis de camion.

Les bielles de liaison numérotées 48 sur les figures, articulées d'une part sur l'extrémité arrière du châssis et d'autre part sur les longerons de la rampe, permettent de la basculer vers l'arrière sous l'action de poussée d'un vérin pivotant 52 monté entre l'extrémité avant du châssis de camion et l'extrémité avant de la rampe.

Sur cette rampe coulisse un plateau de chargement. Pour des raisons de sécurité, les mouvements de basculement arrière sont limités en inclinaison par un verrou 70. Cependant, l'inclinaison minimale possible n'atteint pas 10° d'angle.

Cet ensemble ne permet pas une inclinaison suffisamment faible pour charger toutes les voitures, notamment celles présentant un important porte-à-faux à l'avant ou de faible garde au sol.

Par ailleurs, il ne s'agit que d'une articulation à deux simples bielles.

Il en résulte de nombreux inconvénients. En effet, l'encombrement du vérin en-dessous du plan du faux châssis implique des interventions sur des organes importants du véhicule porteur. Afin de dégager un espace suffisant pour le fonctionnement du vérin, il est souvent nécessaire de modifier les circuits hydrauliques de freinage, pneumatiques, d'échappement ou d'alimentation en gasoil, ce qui, outre le surcoût occasionné par cette intervention, entraîne généralement une limitation de la garantie habituellement accordée par le constructeur du véhicule porteur ainsi modifié.

On a également proposé, dans l'art antérieur, de décaler l'axe de rotation du plateau de chargement en-dessous du plan du faux châssis afin d'obtenir un effet de bras de levier même lorsque le vérin est coplanaire avec le châssis et le plateau de chargement en position abaissée. Un tel mode de réalisation s'est toutefois avéré peu satisfaisant car il entraîne des efforts de structure inacceptables sur le faux châssis, le plateau de chargement et/ou le châssis du véhicule.

Par ailleurs, on connaît aussi divers systèmes et ensembles basculants supportant une charge ou un plateau porteur mettant en oeuvre un mécanisme à compas.

Il s'agit par exemple du dispositif décrit dans le brevet américain n° 3,623,617 (NEMESSANYI).

Ce dispositif a pour but de servir d'élévateur pour accéder à une porte d'avion-cargo.

On distingue un plateau de base et un plateau supérieur articulés entre eux par deux bras sécants formant un ensemble articulé du type ciseaux. L'inclinaison du plateau supérieur résulte du coulissement de l'extrémité supérieure avant au moins d'un des bras sur une came dont la forme du profil et l'emplacement des coudes de changement de direction donnent le détail de la succession des mouvements d'inclinaison du plateau supérieur. Un actionneur commande le mouvement de rapprochement ou d'éloignement des bras sécants.

Il s'agit ici simplement d'un élévateur présentant un mouvement final d'inclinaison du plateau supérieur après un mouvement d'élévation pour sa mise à niveau.

Selon cette réalisation, l'inclinaison n'est que de faible amplitude et s'effectue obligatoirement après un mouvement ascendant de translation lié à la structure même du mécanisme dont les deux bras sécants sont de longueur fixe.

Dans ces conditions, ce type de dispositif de manutention ne peut s'adapter sur le châssis d'un véhicule porteur en vue de charger sur son plateau par traction une voiture immobilisée au sol.

En effet, la cinématique des mouvements possibles ne correspond pas à celle nécessaire à l'actionnement d'un plateau de camion et à ce type de manutention.

La présente invention a pour objet un dispositif de chargement évitant ces inconvénients en raison de son très faible encombrement en hauteur. En effet, l'ensemble des moyens de basculement peut être disposé à l'intérieur du faux châssis et du cadre supportant le plateau de chargement sans aucun dépassement en hauteur.

La présente invention concerne plus particulièrement un dispositif de chargement constitué par un faux châssis destiné à être installé sur le châssis d'un véhicule porteur et d'un plateau de chargement basculant autour d'un axe transversal disposé à l'arrière dudit faux châssis comportant des moyens de basculement du plateau de chargement constitué par au moins un compas articulé dans un plan longitudinal vertical. Ce compas comporte une première branche articulée autour d'un axe inférieur fixe solidaire du faux châssis et d'un axe supérieur solidaire d'un coulisseau mobile longitudinalement par rapport à un cadre basculeur supportant le plateau de chargement ainsi qu'une deuxième branche articulée autour d'un axe inférieur solidaire d'une traverse transversale mobile longitudinalement, par rapport au faux châssis et autour d'un axe supérieur solidaire de la première branche. Les moyens de basculement comportent en outre un actionneur commandant l'ouverture dudit compas. L'actionneur peut être constitué par tout autre moyen connu dans l'état de l'art, en particulier par un moteur électrique, hydraulique ou à explosion commandant un système de vis sans fin, de crémaillère ou de chaîne, ou encore par un vérin hydraulique.

Outre le faible encombrement en hauteur de ce dispositif et l'absence de contrainte exercée tant sur le châssis, la bascule que le faux châssis, il présente de nombreux avantages. En particulier, le basculement du plateau de chargement se fait avec une grande douceur de fonctionnement dans toutes les positions, y compris lors du départ. Par ailleurs, la structure de ce moyen de basculement offre un aspect visuel de grande stabilité. Cet avantage n'est pas négligeable car le conducteur de l'engin n'est généralement pas un ingénieur spécialiste de la résistance des matériaux, et sera rassuré par l'aspect de tréteaux que présentent les moyens de basculement du plateau de chargement.

Par ailleurs, lors de l'utilisation d'un actionneur constitué par un vérin hydraulique, on obtient une amplification de l'angle de basculement sans recours à des vérins spéciaux très longs.

Selon une variante avantageuse, l'axe supérieur autour duquel est articulée ladite deuxième branche, est solidaire dudit coulisseau mobile.

Cette variante aboutit à une réalisation symétrique du compas articulé qui améliore et optimise l'instabilité du moyen de basculement.

Selon un mode de réalisation préféré, le faux châssis est constitué par deux éléments latéraux longitudinaux reliés par au moins une traverse transversale fixe et une traverse transversale mobile longitudinalement, les deux traverses transversales étant du type télescopique.

Cette variante présente un avantage considérable car elle permet de préparer des dispositifs de basculement standard pouvant être installés sur n'importe quel type de véhicule porteur dans la mesure où aucune pièce ne vient en-dessous du plan inférieur du faux châssis et que la largeur peut être adaptée à la largeur du châssis du véhicule récepteur. Le fabricant du dispositif peut ainsi mieux gérer sa production et l'utilisation du véhicule porteur bénéficie de délais d'installation plus courts.

Selon un mode de réalisation particulier, les traverses transversales coopèrent avec les éléments longitudinaux latéraux par l'intermédiaire de rails de guidage longitudinaux fixés sur lesdits éléments latéraux, l'une desdites traverses transversales pouvant être bloquée après installation du faux châssis sur le véhicule porteur.

Selon ce mode de réalisation, il est d'une part possible de modifier la largeur du dispositif afin de l'adapter sur le châssis du véhicule porteur, et d'autre part, il est possible de déplacer le point d'ancrage du dispositif vers l'avant afin d'obtenir un couple supérieur ou vers l'arrière afin d'obtenir un plus grand angle de levage. Le blocage de la traverse transversale fixe peut être réalisé par tout moyen connu dans l'état de l'art, en particulier par soudure, par des boulons ou des rivets.

Selon une variante particulière, la traverse transversale mobile peut être verrouillée de façon transitoire. Le verrouillage de la traverse mobile entraîne bien entendu le blocage du basculement du plateau de chargement.

Selon un mode de réalisation préféré, l'actionneur est constitué par un vérin hydraulique de traction, relié à une traverse transversale fixe disposée à l'arrière du faux châssis d'une part et à la traverse transversale mobile d'autre part. L'utilisation d'un vérin de traction ainsi positionné permet d'optimiser l'encombrement du dispositif.

Selon un mode de réalisation préféré, la première branche est disposée derrière la deuxième branche.

Selon une variante avantageuse, le dispositif comporte en outre un élément de verrouillage sensiblement parallèle audit vérin, constitué par un premier tube articulé autour d'un axe coopérant avec la traverse transversale mobile, ledit premier tube coulissant dans un deuxième tube articulé autour d'un axe coopérant avec une traverse transversale fixe reliée au sous-châssis, le coulissement relatif des tubes pouvant être bloqué par un moyen de verrouillage. Le moyen de verrouillage est avantageusement constitué par un élément en treillis, mobile radialement, fixé sur le tube extérieur et coopérant en position d'engagement avec au moins un orifice de blocage radial du tube intérieur.

Ce moyen de verrouillage permet de bloquer le plateau de chargement en position relevée ou en position abaissée avec une grande sécurité.

De façon avantageuse, le plateau basculant coopère avec le faux châssis par l'intermédiaire d'un axe de rotation transversal situé en-dessous du plan du châssis du véhicule porteur.

L'effet de bras de levier du vérin hydraulique est ainsi amélioré et la puissance transmise au plateau de chargement est accrue.

D'autres exemples de modes de réalisation ressortiront mieux de la description qui va suivre, s'appuyant sur la figure unique qui est une vue en perspective d'un dispositif de basculement selon la présente invention.

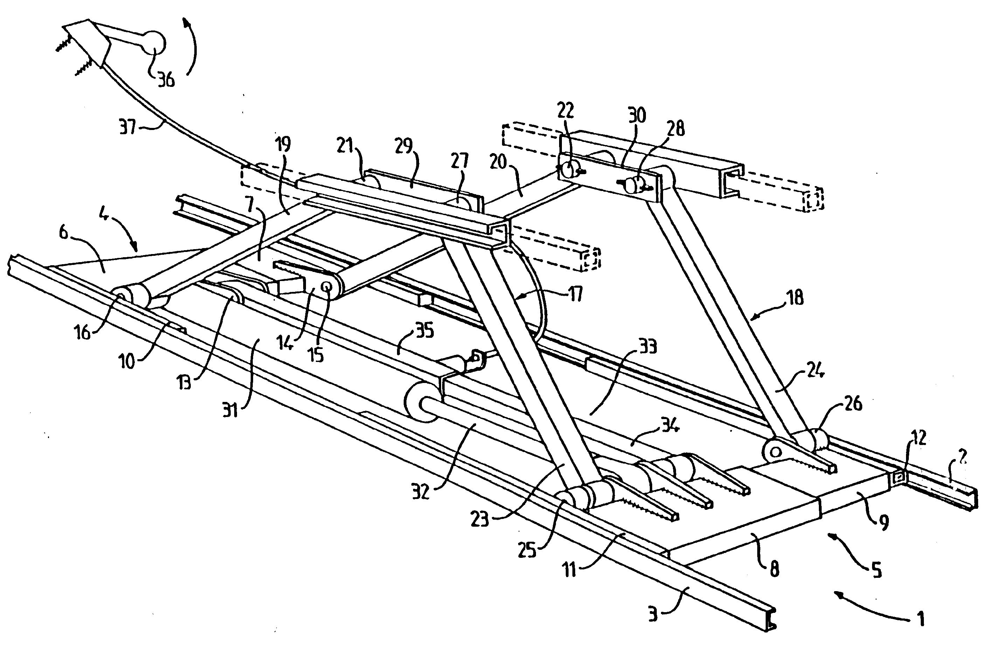

Le dispositif de basculement, représenté en figure 1 est fixé sur le châssis d'un véhicule porteur par l'intermédiaire d'un faux châssis 1 constitué de deux éléments longitudinaux latéraux 2, 3 d'une traverse transversale fixe 4 et d'une traverse transversale mobile 5. Chacune des traverses transversales 4, 5 est constituée par deux parties télescopiques respectivement 6,7 et 8, 9. Une telle structure permet d'abaisser la largeur du faux châssis 1 par soudure d'un élément tubulaire 10 sur l'élément longitudinal latéral 3. Avant la fixation définitive, il est possible d'ajuster la position longitudinale de la traverse transversale fixe 4. La traverse transversale fixe 4 est munie de deux oreilles 13, 14 destinées à maintenir des axes transversaux 15, 16. Ces axes transversaux 15, 16 constituent deux des points d'articulation des compas 17, 18. Les compas 17, 18 sont constitués de deux premières branches 19, 20 mobiles d'une part autour des axes inférieurs 15, 16 et d'autre part autour de deux des axes supérieurs 21, 22. Les compas 17, 18 comportent en outre une deuxième paire de branches 23, 24 articulées autour de deux axes inférieurs 25, 26 coopérant avec la traverse transversale mobile 5, et autour de deux axes supérieurs 27, 28. Les axes supérieurs 21, 22 de la première branche de compas 19, 20 et les axes supérieurs 27, 28 de la deuxième paire de branches 23, 24 sont solidaires de deux coulisseaux respectivement 29, 30. Les coulisseaux 29, 30 sont mobiles longitudinalement par rapport au plateau de chargement non représenté sur la figure.

Le dispositif de basculement comporte en outre un vérin hydraulique dont le corps 31 est fixé sur la traverse transversale fixe 4 et le piston 32 du vérin agit sur la traverse transversale mobile 5. L'élément de verrouillage 33 est disposé parallèlement audit vérin et est constitué d'un tube intérieur 34 raccordé à la traverse transversale mobile 5 par l'intermédiaire de l'axe 25, et par un tube extérieur 35 raccordé à la traverse transversale fixe 4. Un verrou est constitué par une tige coopérant, en position avancée, avec des orifices radiaux pratiqués dans le tube intérieur 34. Le déplacement de la tige est commandé par une manette 36 par l'intermédiaire d'un câble 37.

## Revendications

1. Dispositif de basculement destiné à être installé sur le châssis d'un véhicule porteur en vue d'incliner un cadre basculeur supportant un plateau mobile de chargement, constitué par :
    .un faux châssis (1) ;
    .un cadre basculeur supportant un plateau de chargement basculant autour d'un axe transversal mobile transposé lors de la dépose à l'arrière du faux châssis (1) ;
    .des moyens de basculement du type à compas articulé dans un plan longitudinal vertical ;

    .un actionneur commandant l'ouverture du compas,
    caractérisé en ce que les moyens de basculement du type à compas sont deux compas (17) et (18) identiques et parallèles formés de premières branches (19) et (20) articulées autour d'axes inférieurs fixes (15) et (16) solidaires du faux châssis (1) et autour d'axes supérieurs (21) et (22) mobiles longitudinalement par rapport au cadre basculeur supportant le plateau mobile de chargement, ainsi que de deuxièmes branches (23) et (24) articulées autour d'axes inférieurs (25) et (26) solidaires d'une traverse (5) mobile le long du faux châssis (1) et autour d'axes supérieurs (27) et (28) distincts des axes supérieurs (21) et (22), et en ce que l'actionneur est un vérin hydraulique agissant sur l'un ou l'autre couple d'axes inférieurs.

2. Dispositif de chargement selon la revendication 1, caractérisé en ce que les axes supérieurs (21),(22) et (27),(28) autour desquels sont articulées respectivement chacune des premières et deuxièmes branches (19),(20) et (23),(24) sont solidaires respectivement d'un coulisseau (29) et (30) mobile le long du cadre basculeur porteur du plateau mobile de chargement.

3. Dispositif selon la revendication 1, caractérisé en ce que les axes supérieurs (27) et (28) autour desquels sont articulées respectivement les deuxièmes branches (23) et (24) sont solidaires respectivement des premières branches (19) et (20).

4. Dispositif selon l'une quelconque des revendications 1 à 3, caractérisé en ce que le faux châssis (1) est formé par deux éléments latéraux (2,3) longitudinaux reliés par au moins une traverse fixe (4) et la traverse mobile (5) le long du faux châssis (1).

5. Dispositif selon l'une quelconque des revendications précédentes, caractérisé en ce que les traverses (4,5) coopèrent avec lesdits éléments longitudinaux (2,3) latéraux par l'intermédiaire de rails de guidage longitudinaux, la traverse fixe (4) étant bloquée après installation du faux châssis (1) sur le véhicule porteur.

6. Dispositif selon la revendication 5, caractérisé en ce que la traverse mobile (5) peut être verrouillée de façon transitoire.

7. Dispositif selon l'une quelconque des revendications précédentes, caractérisé en ce que les premières branches (19) et (20) sont disposées derrière les deuxièmes branches (23) et (24).

8. Dispositif selon l'une quelconque des revendications précédentes, caractérisé en ce que l'actionneur constitué par le vérin hydraulique est relié à la traverse fixe (4) d'une part et à la traverse mobile (5) d'autre part.

9. Dispositif selon la revendication 8, caractérisé en ce qu'il comporte en outre un élément de verrouillage (33) sensiblement parallèle au vérin, constitué par un premier tube (34) articulé autour d'un axe coopérant avec la traverse transversale mobile (5), le premier tube (34) coulissant dans un deuxième tube (35) articulé autour d'un axe coopérant avec la traverse fixe (4), le coulissement relatif des tubes (34,35) pouvant être bloqué par un moyen de verrouillage.

10. Dispositif selon l'une quelconque des revendications précédentes, caractérisé en ce que le moyen de verrouillage est constitué par une tige mobile radialement, fixée sur le tube extérieur (35) coopérant, lorsqu'elle est en position d'engagement, avec des orifices de blocage radiaux prévus sur le tube intérieur (34).

11. Dispositif selon l'une quelconque des revendications précédentes, caractérisé en ce que le cadre basculeur coopère avec le faux châssis (1) par l'intermédiaire d'un axe de pivotement transversal situé en-dessous du plan du châssis du véhicule porteur.

**Patentansprüche**

1. Kippvorrichtung zur Anbringung am Chassis eines Trägerfahrzeugs, um ein Kippgestell zu neigen, das eine bewegliche Ladeplattform trägt, bestehend aus:
   –einem Hilfsrahmen (1),
   –einem Kippgestell, das eine Ladeplattform trägt, die an einer beweglichen Querachse gelagert ist, die beim Absetzen auf die Heckseite des Hilfsrahmens verlagert wird.
   –Scherenhubsystem, das in einer vertikalen Längsebene schwenkbar sind,
   schwenkbar ist,
   –einer Betätigungsvorrichtung, die die Öffnungsweite des Scherenhubsystems steuert, dadurch gekennzeichnet, daß die trapezförmigen Kippmittel zwei identische und parallel angeordnete Scharen (17 und 18) aufweist, die von ersten Schenkeln (19 und 20) die an unteren, ortsfesten Achsen (15 und 16) am Hilfsrahmen (1) und an oberen Achsen (21 und (22), die in Längsrichtung in Bezug auf das die verstellbare Ladeplattform tragende Kippgestell bewegbar sind, angelenkt sind, und von den zweiten Schenkeln (23 und 24) gebildet sind, die an unteren, an einer längs des Hilfsrahmens (1) beweglichen Traverse (5) ausgebildeten Achsen (25 und 26) und an oberen, von den anderen oberen Achsen (21 und 22) verschiedenen Achsen (27 und 28) gelagert sind, und daß die Betätigungsvorrichtung ein Hydraulzylinder ist, der auf das eine oder das andere Paar der unteren Achsen wirkt.

2. Vorrichtung nach Anspruch 1, dadurch gekennzeichnet, daß die oberen Achsen (21, 22 und 27, 28), an denen jeweils jeder erste und zweite Schenkel (19, 20 und 23, 24) angelenkt ist jeweils mit einem Schlitten (29 und 30) verbunden sind, der längs des das die bewegbare Ladeplattform tragenden Kippgestells beweglich ist.

3. Vorrichtung nach Anspruch 1, dadurch gekennzeichnet, daß die oberen Achsen (27 und 28), an denen jeweils die zweiten Schenkel (23 und 24) eingelenkt sind, jeweils mit den ersten Schenkeln (19 und 20) verbunden. sind.

4. Vorrichtung nach einem der Ansprüche 1 bis 3, dadurch gekennzeichnet, daß der Hilfsrahmen (1) von zwei längs verlaufenden Seitenelementen (2,3) gebildet ist die über zumindest eine ortsfeste Traverse (4) und eine längs des Hilfsrahmens (1) begehbare Traverse (5) verbunden sind.

5. Vorrichtung nach einem der vorhergehenden Ansprüche, dadurch gekennzeichnet, daß die Traversen (4,5) mit den längs verlaufenden Seitenelementen (2,3) über längs verlaufende Führungsschienen zusammenwirken, und die ortsfeste Traverse (4) nach Anbringen des Hilfsrahmens (1) an dem Trägerfahrzeug blockiert wird.

6. Vorrichtung nach Anspruch 5, dadurch gekennzeichnet, daß die bewegbare Traverse (5) vorübergehend verriegelbar ist.

7. Vorrichtung nach einem der vorhergehenden Ansprüche, dadurch gekennzeichnet, daß die ersten Schenkel (19 und 20) hinter den zweiten Schenkeln (23 und 24) angeordnet sind.

8. Vorrichtung nach einem der vorhergehenden Ansprüche, dadurch gekennzeichnet, daß die von dem Hydraulikzylinder gebildete Betätigungsvorrichtung einerseits an der ortsfesten Traverse (4), andererseits an der bewegbaren Traverse (5) angebracht ist.

9. Vorrichtung nach Anspruch 8, dadurch gekennzeichnet, daß sie ferner ein sich parallel zu dem Zylinder erstreckendes Verriegelungselement (33) umfaßt, das von einem ersten Rohr (34) gebildet ist, das an einer mit der beweglichen Quertraverse (5) zusammenwirkenden Achse angelenkt ist, und in einem zweiten Rohr (35) verschiebbar ist, das an einer mit der ortsfesten Traverse (4) zusammenwirkenden Achse gelagert ist, wobei die gegenseitige Verschiebung der Rohre (34, 35) durch ein Verriegelungsmittel blockierbar ist.

10. Vorrichtung nach einem der vorhergehenden Ansprüche, dadurch gekennzeichnet, daß das Verriegelungsmittel von einem radial beeweglichen Stift gebildet ist, der an dem äußeren Rohr (35) festgelegt ist und in seiner Eingriffsstellung mit an dem inneren Rohr (34) ausgebildeten, radialen Riegelöffnungen zusammenwirkt.

11. Vorrichtung nach einem der vorhergehenden Ansprüche, dadurch gekennzeichnet, daß das Kippgestell mit dem Hilfsrahmen (1) über iene Quer-Schwenkachse zusammenwirkt, die unterhalb der Ebene des Chassis des Trägerfahrzeugs liegt.

**Claims**

1. Rocking device to be installed on the chassis of a transporter vehicle for inclining a rocker frame supporting a mobile loading platform, comprising:
   .a subframe (1);
   .a rocker frame supporting a loading platform which rocks about a movable transverse axis transposed to the rear of the subframe (1) when unloading takes place;
   .rocking means of the compasses type articulated along a longitudinal vertical plane;
   .an actuator which controls the opening of the compasses;
   characterised in that the compasses-type rocker means are two identical, parallel compasses (17) and (18) comprising first legs articulated about fixed lower shafts (15) and (16) integral with the subframe (1), and about upper shafts (21) and (22) displaceable longitudinally relative to the rocker frame supporting the mobile loading platform, as well as second legs (23) and (24) articulated about lower shafts (25) and (26) integral with a crosspiece (5) displaceable along the subframe (1) and about upper shafts (27) and (28) separate from the upper shafts (21) and (22); and in that the actuator is a hydraulic jack acting on either of the lower pair of shafts.

2. Loading device according to claim 1, characterised in thai the upper shafts (21), (22) and (27), (28) about which each of the first and second legs (19), (20) and (23), (24) are articulated respectively, are integral respectively with a slide (29) and (30) displaceable along the rocker frame which supports the displaceable loading platform.

3. Loading device according to claim 1, characterised in that the upper shafts (27) and (28) about which ine second legs (23) and (24) are articulated respectively, are integral respectively with the first legs (19) and (20).

4. Device according to any one of claims 1 to 3, characterised in that the subframe (1) comprises two longitudinal side elements (2,3) joined by at least one fixed crosspiece (4) and the crosspiece (5) which is displaceable along the subframe (1).

5. Device according to any one of the preceding claims, characterised in that the crosspieces (4,5) co-operate with the said longitudinal side elements (2,3) by means of longitudinal guide rails, the fixed crosspiece (4) being immobilised after the subframe (1) has been installed on the transporter vehicle.

6. Device according to claim 5, characterised in that the displaceable crosspiece (5) may be temporarily locked.

7. Device according to any one of the preceding claims, characterised in that the first legs (19) and (20) are disposed behind the second legs (23) and (24).

8. Device according to any one of the preceding claims, characterised in that the actuator constituted by the hydraulic jack is connected both to the fixed crosspiece (4) and to the displaceable crosspiece (5).

9. Device according to claim 8, characterised in that it further comprises a locking element (33) substantially parallel to the jack, consisting of a first tube (34) articulated about a shaft co-operating with the displaceable transverse crosspiece (5), wherein the first tube (34) slides in a second tube (35) articulated about a shaft co-operating with the fixed crosspiece (4), in such a manner that the sliding of the tubes (34,35) can be immobilised by a locking means.

10. Device according to any one of the preceding claims, characterised in that the locking means comprises a rod displaceable radially attached to the outer tune (35), which, when it is in the engaged position, co-operates with radial locking apertures disposed on the inner tube (34).

11. Device according to any one of the preceding claims, characterised in that the rocker frame co-operates with the subframe (1) by means of a transverse pivoting shaft located below the plane of the transporter vehicle chassis.